Europäisches Patentamt

European Patent Office

Office européen des brevets

(11) Publication number: **0 092 431**
A2

(12) # EUROPEAN PATENT APPLICATION

(21) Application number: 83302222.1

(22) Date of filing: 19.04.83

(51) Int. Cl.³: **C 03 C 9/00, C 03 C 5/00**

(30) Priority: 19.04.82 GB 8211249

(43) Date of publication of application: 26.10.83
Bulletin 83/43

(84) Designated Contracting States: **AT BE CH DE FR GB IT
LI LU NL SE**

(71) Applicant: **JOHNSON MATTHEY PUBLIC LIMITED
COMPANY, 43 Hatton Garden, London, EC1N 8EE (GB)**

(72) Inventor: **Rudd, Peter William, 69 Totley Brook Close,
Totley SHeffield (GB)**
Inventor: **Murray, Robert John, 15 Barnwell Close
Stramshall, Uttoxeter Staffordshire (GB)**

(74) Representative: **Arthur, Bryan Edward et al, Withers &
Rogers 4 Dyer's Buildings Holborn, London EC1N 2JT
(GB)**

(54) Sprayable enamel suspensions.

(57) This invention relates to sprayable enamel suspensions suitable for application to refractory substrates such as ceramic and especially glass substrates. It also relates to vehicles for use in the suspensions and to a process for decorating substrates in which a suspension is sprayed onto the substrates. In more detail, the sprayable enamel suspensions according to the invention comprises colouring material, glass flux and a thixotropic aqueous emulsion of acrylic resin and inorganic viscosity control agent.

EP 0 092 431 A2

- 1 -

SPRAYABLE ENAMEL SUSPENSIONS

This invention relates to sprayable enamel suspensions suitable for application to refractory substrates such as ceramic and especially glass substrates. It also relates to vehicles for use in the suspensions and to a process for decorating substrates in which a suspension is sprayed onto the substrates.

Enamels used in the decoration of refractory substrates comprise colouring material usually mixed with a comminuted glass flux. One method of applying an enamel to a substrate involves dispersing the enamel in a relatively volatile carrier vehicle to form a suspension of the enamel in the vehicle and then spraying the suspension onto the substrate and firing. Firing evaporates off the vehicle, fuses the flux and bonds the colouring material to the substrate. Ceramic substrates (for example pottery and porcelain) are usually fired at temperatures of up to 800°C whereas glass substrates are usually fired at temperatures of up to only 600°C except that temperatures of up to 740°C may be tolerated for short periods. A flux must melt at temperatures safely below these maxima and this generally demands that the glass comprising the flux should contain a high proportion of lead moiety. Lead contents of 45% by weight or more are common. However the lead content increases the density of the flux which in turn promotes an unwanted tendency for the enamel to settle out from the suspension. Increased density is particularly noticeable in so-called "low durability" enamels in which the flux contains from 70 to 88% by weight of lead oxide.

Settlement is especially troublesome when the vehicle is aqueous, for example when the vehicle comprises water and alcohol. (Alcohols accelerate drying prior to firing and also act as wetting agents). Possibly in aqueous vehicles the colouring material and the flux develop opposite electrical charges becoming mutually attractive whereupon the enamel would be more liable to settle. Settlement can result in agglomeration of the colouring material into a solid mass which is impossible to re-disperse and which can foul the lines and containers of spraying equipment. Agglomeration is most troublesome when the lead content of the flux is from 40 to 70 wt %.

An attempt was made to overcome the settlement problem by using vehicles comprising cellulosic materials. However the concentration of cellulosic material needed to overcome the settlement problem so increased the viscosity of the suspension that the suspension became unsuitable for spraying. In addition the presence of the high concentrations of cellulosic material during firing led to bubbling, blistering and the appearance of carbonaceous materials. The cellulosic material also proved to be a host for micro-organisms which bio-degraded the suspension causing changes in its rheology and generating unpleasant smells.

An object of this invention is to provide an aqueous sprayable enamel suspension which is less prone to settlement of the enamel and/or agglomeration of the colouring material during transportation, storage or use in spraying equipment.

Accordingly this invention provides a sprayable enamel suspension comprising colouring material, glass flux and a thixotropic aqueous emulsion of acrylic resin and inorganic viscosity control agent. The suspensions are resistant to settlement and agglomeration. In the absence of the control agent, the suspensions exhibited the so-called "tearing" effect on spraying, that is to say the film produced by spraying was uneven often resulting in the substrate being visible through the film. In severe cases areas of substrate were left exposed. On the other hand, in the absence of the acrylic resin, excessively thick films were needed to achieve the smooth wet finish which is needed to give a glossy surface on firing. In addition runs appeared on the sprayed film which was unexpected because runs are seldom experienced with aqueous vehicles and moreover in the field of polyester resins, inorganic viscosity control agents are used to prevent runs.

The suspension comprises preferably from 0.1 to 2 wt % of acrylic resin although often no more than 0.5 wt % need be used. The suspension preferably comprises from 0.05 to 4 wt % of the inorganic viscosity control agent. To some extent, the preferred weight ratios of acrylic resin to control agent vary inversely with the density of the control agent and the density of the control agent can vary over a wide range (for example from 0.025 to 3 g/cm). However in general the preferred weight ratios of acrylic resin to control agent in the suspension lie in the range of from 1:2 to 10:1 of resin to control agent with the lower ratios being most preferred for use with the denser control agents. These preferred suspensions were not only sufficiently stiff (when the emulsion was in the gel state) to inhibit settling of enamels comprising a lead-containing moiety but they also inhibited agglomeration even in the presence of those fluxes most prone to promote agglomeration, namely fluxes containing 40 to 70 wt % of lead moiety. The total solids content of the suspension may vary over a wide range (for example from 8 to 85 wt %) and so the suspension can accommodate a large proportion of solid colouring material. On subjecting the suspensions to shear, they became sufficiently. fluid to spray throught a conventional spray gun. It was also discovered that in many cases the suspensions could be applied without the need for conventional de-greasing of the substrate and that often a glossy finish could be obtained after only one or two applications whereas in the past four or more applications would have been needed.

The acrylic resin should be of the type capable of forming a thixotropic aqueous emulsion. Resins of this type are commercially available and well known to the paint and wallcovering trades. They generally comprise fine particles of film-forming homopolymers or copolymers of predominantly acrylic or methacrylic moieties. Most of such resins are responsive to changes in the pH of an aqueous emulsion to the extent that altering the pH alters the viscosity of the emulsion in the gel state. This enables the viscosity of the suspension to be easily adjusted to offset changes caused by variations in the colouring material or to meet the different needs of various spraying apparatus. Preferably the viscosity of the suspension is from 20 to 35 poise when measured using a rotating cylinder viscometer in which the cylinder has a diameter of 22 mm and is rotating at 66 revolutions per minute.

Preferably the inorganic viscosity control agent is used in the form of particles having sizes which are easily dispersed in aqueous media to form colloidal dispersions. Preferred colloidal control agents include silica and clays, especially the bentonite clays. A preferred silica is fumed silica, that is to say silica made for example by subjecting sand to a plasma jet or by reacting silicon tetrachloride with hydrogen and oxygen in a flame.

The invention is further illustrated by the following examples.

EXAMPLE 1

A sprayable enamel suspension having the composition as

0092431

specified in Table 1 was made by mixing the components specified in a 'Silverson' mixer.

TABLE 1

| Component | % by weight |
|---|---|
| Powdered glass enamel | 73.9 |
| Sodium nitrite | 0.3 |
| Acrylic resin | 1.0 |
| Fumed silica | 0.2 |
| 5:1 mixture (by volume) of water and methanol | balance |

The powdered glass enamel was a standard brown enamel comprising titanium dioxide and cadmium-based colouring materials and also a lead-containing glass frit. The approximate composition of the enamel is specified in Table 2 although the proportion of lead oxide may vary by +/- 5% with compensating proportional variations in the amounts of the other components.

- 8 -

0092431

TABLE 2

| Component | % by weight |
|---|---|
| PbO | 50 |
| $SiO_2$ | 33.3 |
| $B_2O_3$ | 5.3 |
| $Li_2O$ | 1.1 |
| $TiO_2$ | 2.1 |
| $ZrO_2$ | 7 |
| CdO | 1.2 |

The acrylic resin component of the suspension was a commercially available acrylic copolymer containing carboxyl groups and having a fine particle size. The resin was sold by Allied Colloids Limited under the trade name 'Viscalex' HV30. The resin was added to the mixer in the form of an aqueous emulsion containing 30 wt % solids and having a pH of 3 to 5 and a Brookfield viscosity of 500 poise at 0.5 revolutions/minute.

Sodium nitrite is used in the pigment trade as a grinding aid.

After mixing, a 33 wt % aqueous solution of ammonia is added to the suspension to bring its pH into the range of from 8 to 9 in order to induce the gel state. The gel state was capable of inhibiting settlement and even 12 months after settlement had occurred, the onset of agglomeration was inhibited and even though the glass frit contained a proportion of lead moiety in the range 40 to 70 wt %, the settled solids were easily re-dispersed.

The suspension was sprayed onto a toughened opalware substrate and flash fired on a cycle of 11 minutes to reach a peak of 720 to 740°C. The opalware was then toughened by chilling. A satisfactory glossy finish was obtained.

EXAMPLE 2

The procedure of Example 1 was repeated to produce a sprayable enamel suspension having the composition specified in Table 3 which differs from that specified in Table 1 mainly in that a synthetic bentonite clay is used instead of fumed silica. The bentonite was a processed magnesium montmorillonite having a density of 2.4 g/cm$^3$ and was supplied by Steetley Minerals Limited under the trade name 'Bentone' EW. The enamel and the acrylic resin were the same as used in Example 1.

TABLE 3

| Component | % by weight |
|---|---|
| Powdered glass enamel | 60 |
| Sodium nitrite | 0.5 |
| Acrylic resin | 1.5 |
| Bentonite | 0.3 |
| 5:1 mixture (by volume) of water and methanol | Balance |

To induce a gel state having a viscosity of 30 poise, it was necessary to add ammonia until the pH of the suspension reached 12. For this reason it may be less convenient to use a bentonite instead of silica but otherwise the suspensions of Examples 1 and 2 could be regarded as satisfactory alternatives.

EXAMPLE 3

Three similar sprayable enamel suspensions having compositions as specified in Table 4 were made by the procedure of Example 1. The suspensions differed only in the proportion of enamel they contained. All performed satisfactorily in all respects.

| Component | Parts by weight |
|---|---|
| Enamel | 177, 395 or 750 |
| Sodium Nitrite | 3 |
| Acrylic resin | 10 |
| Fumed silica | 1.75 |
| Water/methanol | Balance |

EXAMPLE 4

Four suspensions containing 395 parts by weight of enamel were made according to Example 3 except that the brown colouring material was replaced in turn by a titanium dioxide white, by a cadmium-based yellow, by a cadmium-based red and by a cobalt black. The white is hydrophilic whereas the black is hydrophobic. Nevertheless, despite these differences in their colouring materials, all four emulsion performed satisfactorily in all respects.

This invention also provides a vehicle for use in sprayable enamel suspensions wherein the vehicle comprises a thixotropic aqueous emulsion of acrylic resin and inorganic viscosity control agent. The invention further provides a process for decorating ceramic or glass substrates which comprises spraying an enamel suspension according to this invention onto the substrate and then drying and firing. The process is especially applicable to articles of holloware including ovenware and tableware and in particular oven to table ware such as casserol dishes.

**CLAIMS**

1.        A sprayable enamel suspension comprising colouring material, glass flux and a thixotropic aqueous emulsion of acrylic resin and inorganic viscosity control agent.

2.        A suspension according to claim 1 which comprises from 0.1 to 2 wt % of acrylic resin.

3.        A suspension according to claim 1 or claim 2 which comprises from 0.05 to 4 wt % of inorganic viscosity control agent.

4.        A suspension according to any one of the preceding claims wherein the weight ratio of acrylic resin to inorganic viscosity control agent lies in the range of from 1:2 to 10:1.

5.        A suspension according to any one of the preceding claims wherein the inorganic viscosity control agent is in the form of particles having sizes which are easily dispersed in aqueous media to form colloidal dispersions.

6.      A suspension according to any one of the preceding claims wherein the inorganic viscosity control agent comprises silica or a bentonite clay.

7.      A vehicle for use in a suspension as claimed in any one of the preceding claims wherein the vehicle comprises a thixotropic aqueous emulsion of acrylic resin and inorganic viscosity control agent.

8.      A process suitable for decorating ceramic or glass substrates which comprises spraying an enamel suspension as claimed in any one of claims 1 to 6 onto the substrate, then drying the sprayed substrate and firing.

9.      A ceramic or glass substrate when decorated by a method which comprises a process as claimed in claim 8.

10.      An article of oven or table ware having a decorated substrate as claimed in claim 9.